# EUROPEAN PATENT SPECIFICATION

(11) **EP 2 512 214 B1**
(45) Date of publication and mention of the grant of the patent: **31.07.2013**
(21) Application number: 10790386.6
(22) Date of filing: 03.12.2010
(51) Int. Cl.: A01D 46/26

(54) **PICKING DEVICE FOR HANGING FRUIT, IN PARTICULAR OLIVES.**
VORRICHTUNG ZUM ERNTEN VON HÄNGENDEN FRÜCHTEN, INSBESONDERE OLIVEN
APPAREIL DE CUEILLETTE DE FRUITS SUSPENDUS, EN PARTICULIER DES OLIVES

(30) Priority: 16.12.2009 IT MC20090253
(43) Date of publication of application: 24.10.2012
(73) Proprietor: Ceccacci, Giuliano, 60013 Corinaldo (AN) (IT)
(72) Inventor: Ceccacci, Giuliano, 60013 Corinaldo (AN) (IT)
(74) Representative: Baldi, Claudio
(86) International application number: PCT/EP2010/068890
(87) International publication number: WO 2011/073046

(56) References cited:
- EP-A1- 1 051 900
- EP-A1- 1 175 823
- EP-A1- 1 795 064

## Description

The present patent application for industrial invention relates to a picking device for hanging fruit, in particular olives, commonly defined as beater.

As it is known, a beater comprises a couple of opposite racks that are pneumatically controlled to move with alternate motion and cause the detachment of fruit from trees. Said racks are mounted on the head of an internal rod that telescopically slides inside an external rod adapted to be held by the user.

The beaters according to the prior art are impaired by some drawbacks.

The racks comprise prongs mounted on linear supports that radially extend outwards with respect to the axis of the telescopic rods. Consequently this type of racks is very cumbersome and tends to get stuck in the branches of thick-crowned trees.

An actuation mechanism is generally used to actuate said racks in alternate motion, comprising a reduction gear box. This involves high complexity and weight of the actuation mechanism mounted at the head of the upper telescopic rod.

Consequently, in order to support the actuation device, the two telescopic rods must have a large diameter and high thickness. For instance, the external rod has a diameter of about 35 mm and thickness higher than 1.5 mm. Said dimensions of the telescopic rods further increase the weight of the beater, which is generally higher than 2.5 Kg. Evidently, the large diameter of the external telescopic rod and the high weight of the entire beater device contribute to reducing maneuverability.

Moreover, it must be considered that the high weight of the racks and the high friction of the gear boxes contribute to high power dissipation of the electric motor. Generally, the electric motor absorbs a current higher than 10 amp/hour.

Accordingly the beater must be provided with cumbersome batteries that impair maneuverability further. Moreover, the life of the batteries is very limited, being approximately four hours for an ordinary 40 amp/hour battery, making it impossible to use the beater for harvesting works that require several hours, unless very expensive lithium batteries are used.

EP 1 051 900 discloses a beater provided with two racks with opposite series of prongs, wherein the prongs of a series are staggered with respect to the prongs of the opposite series.

The purpose of the present invention is to eliminate the drawbacks of the prior art by disclosing a picking device for hanging fruit that is easy to handle, not too cumbersome, light, efficient, versatile and easy to use.

This purpose has been achieved according to the present invention, with the characteristics illustrated in the attached independent claim 1.

Advantageous embodiments are disclosed in the dependent claims.

The picking device for hanging fruit, in particular olives, according to the invention comprises:
- a head,
- a pair of racks provided with prongs,
- an actuation mechanism provided inside the head and adapted to move the racks with alternate motion.

Each rack comprises:
- a support provided with a tapered axial hole with increasing diameter from down up, and
- an insert provided with tapered body with increasing diameter from down up, adapted to be coupled inside said axial hole of the support with conical coupling.

In view of the above, the lower part of the prongs is compressed between the external surface of the body of the insert and the internal surface of the support, in such a way that the prongs have a divergent configuration relative to the axis of the support from down up.

The advantages of the invention are evident. In fact, this particular configuration of the racks allows for using the device also in thick-crowned trees.

Moreover, the particular configuration of the racks allows for obtaining a very compact actuation mechanism of the racks that can be contained inside the head of the device.

In this way, the head can act as handle, regardless of the fact that it is mounted on a telescopic rod system.

Further characteristics of the invention will become clearer from the detailed description below, which refers to a merely illustrative, not limiting, embodiment, as shown in the enclosed figures, wherein:
Fig. 1 is a perspective view of the picking device for hanging fruit according to the invention;
Fig. 2 is a perspective view of the head of the device of Fig. 1;
Fig. 3 is an exploded view of the head of Fig. 2;
Fig. 4 is a partially sectional view of the head of Fig. 2;
Fig. 5 is a perspective view of the head of Fig. 2 with upper lid removed;
Fig. 6 is an exploded view of the racks of the head of Fig. 2; and
Fig. 7 is an axial sectional view of a rack of the head of Fig. 2.

Referring to the aforementioned figures, the picking device for hanging fruit according to the invention is disclosed, which is globally referred to with numeral (100).

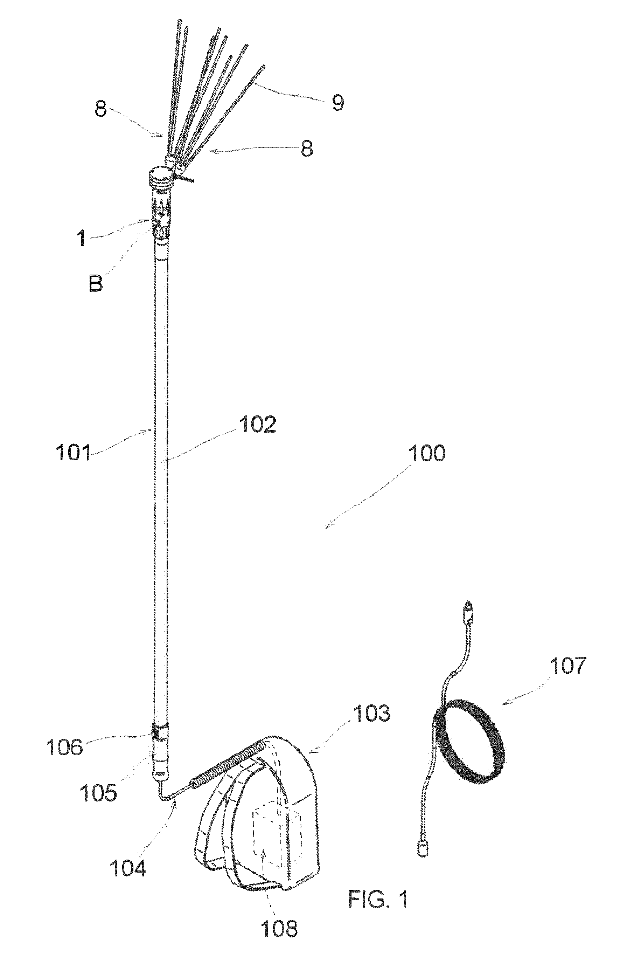

With reference to Fig. 1, the device (100) comprises a telescopic rod system (101) comprising an external rod (102) and an internal rod (not visible in the drawing) that slides telescopically inside the external rod (102).

A head (1) is mounted at the upper end of the internal rod, containing suitable actuation means designed to actuate two racks (8) with alternate motion in order to knock down the hanging fruit.

The device (100) is provided with suitable power supply means (108) to power the actuation means mounted in the head (1). The power supply means (109) can be contained in a backpack (103) provided with shoulder straps in order to be carried by the user.

A cable or tube (104) connects the power supply means (108) with the actuation means mounted inside the head (1). The cable or tube (104) passes inside the telescopic rod system (101).

A handle (105) is mounted at the lower end of the external rod (102), provided with a button (106) connected to a switch in order to power the actuation means.

The device (100) is also provided with a second power cable or tube (107) to connect the power supply means (108) directly to the actuation means inside the head (1) without the need for the telescopic rod system (101). In such a case the user can only use the head (1), for instance to knock down the fruit on low-stemmed trees. Consequently, also the head (1) is provided with a button (B) connected to a switch to power the actuation means.

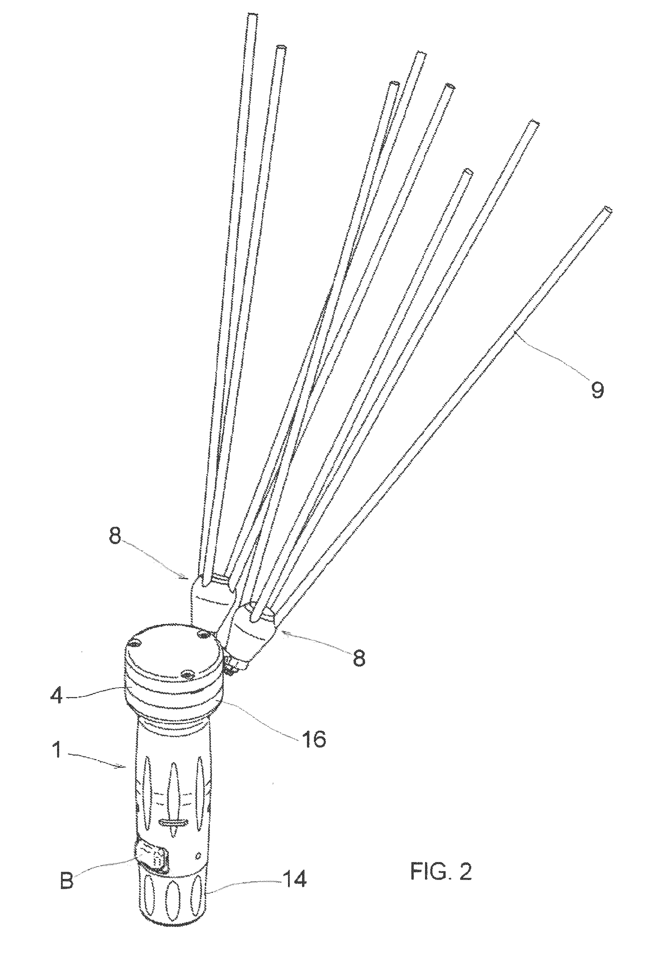

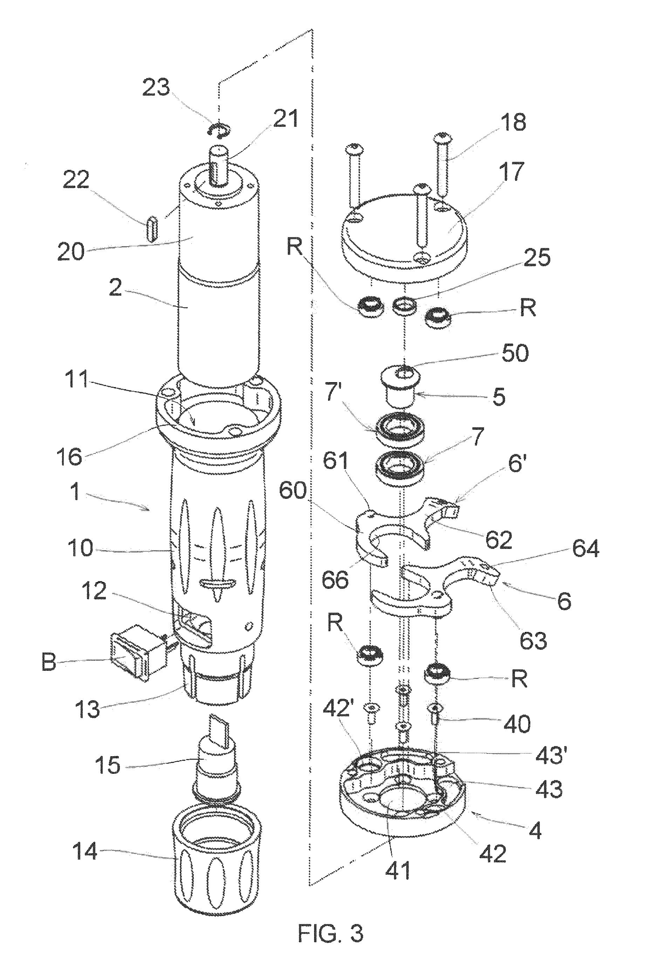

Referring to Figs. 2 and 3, the head (1) has a basically cylindrical body (10) with diameter of approximately 40 mm and length of approximately 160 mm. Advantageously the body (10) of the head has an ergonomic shape in order to act as handle and be used independently from the telescopic rod system. The body (10) is internally empty and is provided with an axial housing (11) to receive an actuation means (2) designed to drive into rotation an output shaft (21) arranged axially in the upper part of the head (1).

Advantageously, the actuation means (2) comprises an electric motor (2) connected to an epicycloidal reduction gear (20) that drives into rotation the output shaft (21). In this case the power supply means (108) are batteries, such as for example an ordinary 40 or 50 amp/hour battery normally used to power portable tools, such as drills or similar. Advantageously, a lithium battery with reduced weight can be used and disposed in the user's belt.

The epicycloidal reduction gear (20) guarantees a reduction of the revolution speed of the output shaft (21) with maximum efficiency and minimum volume in radial direction.

The actuation means (2) can also be a hydraulic or pneumatic motor; in this case the power supply means (108) comprise a pump or compressor.

The actuation means (2) can also be an internal combustion motor; in such a case, the power supply means (108) comprise a fuel tank.

The output shaft (21) is coupled on the rotor of the reduction gear (20) by means of a key (22) and a Seeger (23).

A radial housing (12) is obtained in the lower part of the body (109) to receive the switch button (B) provided with electrical contacts for connection to the electric motor (2).

The body (10) is provided in lower position with a connection (13) with expandable wings to connect to the upper end of the internal rod of the telescopic system (101). A threaded ring (14) is tightened on the connection (13) to firmly lock the head (1) on the rod of the telescopic system. In this way the head (1), which is the actual tool, is interchangeable independently from the telescopic rods.

An electrical connector (15) is arranged in the lower part of the body (10) to be electrically connected to the motor. The electrical connector (15) can removably receive a complementary connector provided in the upper end of the telescopic system and in the supplementary electrical cable (107).

The body (10) of the head is provided with a collar (16) with higher diameter in the upper end. A flange (4) is mounted on the collar (16) by means of screw means (40).

The flange (4) comprises:
- a central hole (41),
- two peripheral circular housings (42, 42') arranged in diametrally opposite positions, and
- two peripheral slots (43, 43') in close position.

In particular, the housing (42) and the slot (43) are obtained at a lower level than the housing (42') and the slot (43').

The slots (43, 43') create a labyrinth to prevent the entrance of dust.

A pin (5) has an eccentric hole (50) that receives the output shaft (21) of the reduction gear, so that the pin (5) can pass through the central hole (41) of the flange (4). A locking ring (25) is mounted in the upper end of the output shaft (21) above the eccentric pin (5).

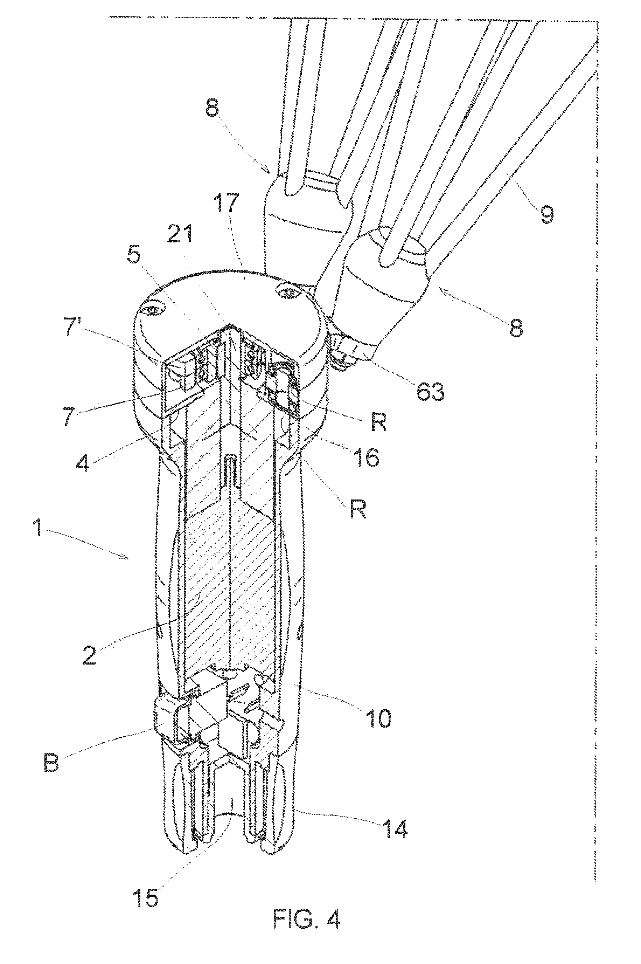

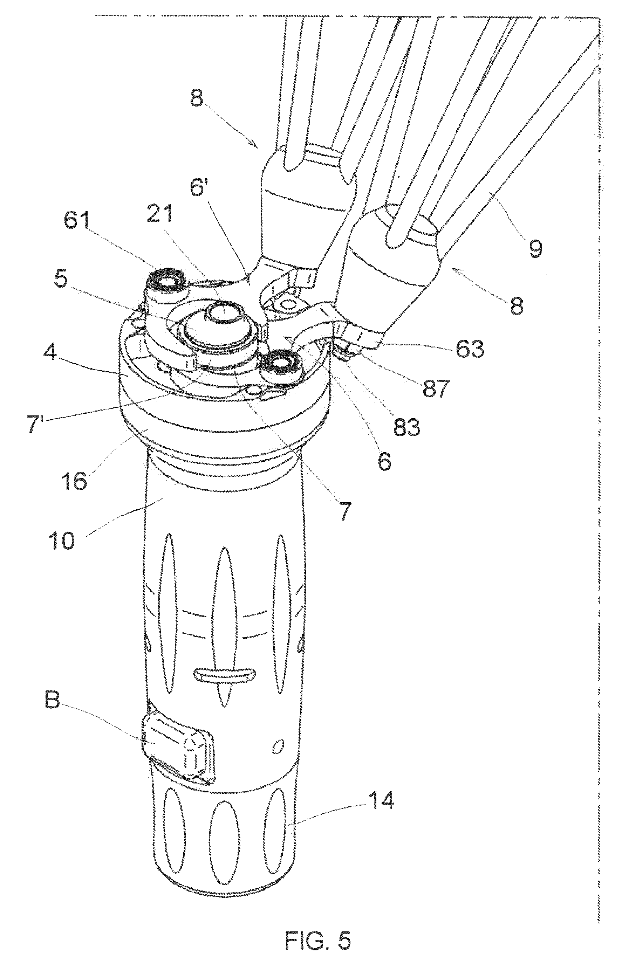

Also referring to Figs. 4 and 5, two connecting rods (6, 6') are mounted on the flange (4). Each connecting rod (6, 6') comprises:
- a connecting rod head (60) that forms a U-shaped arched housing (66),
- a pivoting pin (61) arranged on the connecting rod head (60) in such a way to protrude in upper and lower position with respect to the connecting rod head,
- an arm (62) that protrudes radially from the connecting rod head (60) and ends in a connecting rod foot (63) provided with a fixing hole (64).

The foot (63) of each connecting rod (6) is arranged on a downward inclined plane with respect to the plane of the arm (62) and head (60). It must be considered that the arm (62) and head (60) of the rod are designed to be arranged according to a horizontal plane.

The two connecting rods (6, 6') are positioned on the flange (4) with the arched housings (66) in opposite position around the pin (5) with eccentric hole (50).

Two ball bearings (7, 7') are arranged around the pin (5) so that the internal rings of the bearings are in contact with the pin (5); whereas the external rings of the bearings are in contact with the arched housings (66) of the connecting rods (6, 6').

It must be noted that the heads (60) of the rods (7, 7') are supported by the flange (4) on different height levels in order to avoid mutual inference.

Two lower friction rings (R) are arranged in the circular housings (42, 42') of the flange (4) and the lower end of the pins (61) of each connecting rod is arranged inside the friction rings (R) so that the lower friction rings (R) rub on the lower surface of the connecting rod head (60).

Likewise, two upper friction rings (R) are arranged around the upper end of the pins (61) of each connecting rod, so that the upper friction rings (R) rub the upper surface of the connecting rod head (60). The upper friction rings (R) are housed in corresponding housings (not shown) obtained in a lid (17) that is closed on the flange (4) by means of screw means (18).

The friction rings (R) are made of a material with low coefficient of friction, such as Teflon.

It must be noted that the provision of the two ball bearings (7, 7') and four friction rings (R) minimize the sliding friction and rolling friction to which the two connecting rods (6, 6') and the pin (5) with eccentric hole are subject. This particular configuration of the actuation mechanism minimizes volume, weight and friction. Therefore, the entire actuation mechanism can be inserted in the head-handle (1) without excessively increasing the weight of the beater. Moreover, in case of electrical motor (2), the motor absorbs a current of about 3 amp/hour. Consequently, the batteries (108) can be ordinary 40 or 50 amp/hour batteries, with life longer than 13 hours.

The feet (63) of the connecting rods (6, 6') radially protrude outwards from the flange (4) and from the circular lid (17). In this way, two racks (8) can be mounted on the feet (63) of the two connecting rods (6, 6').

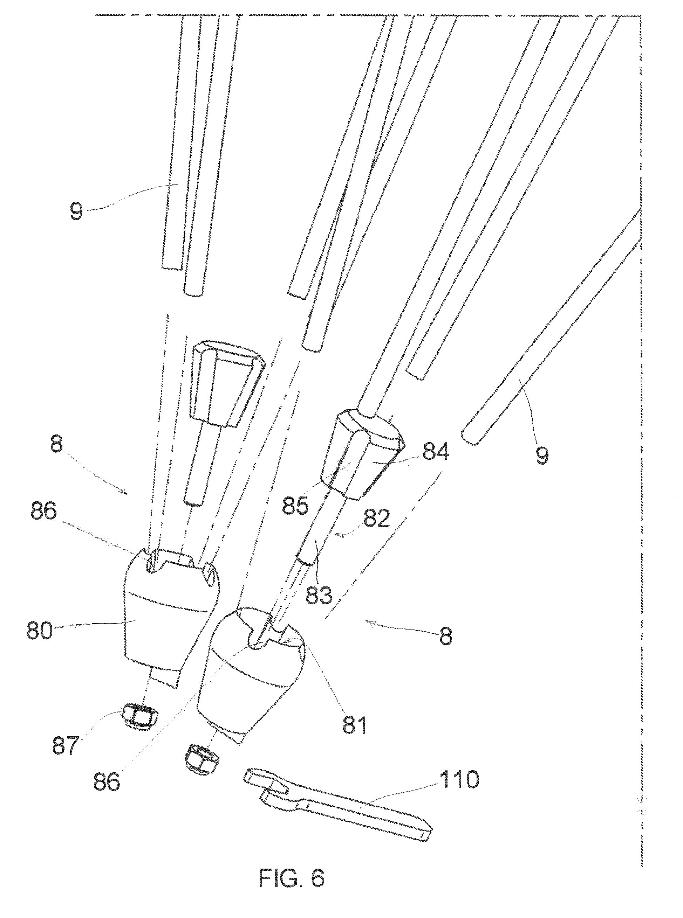

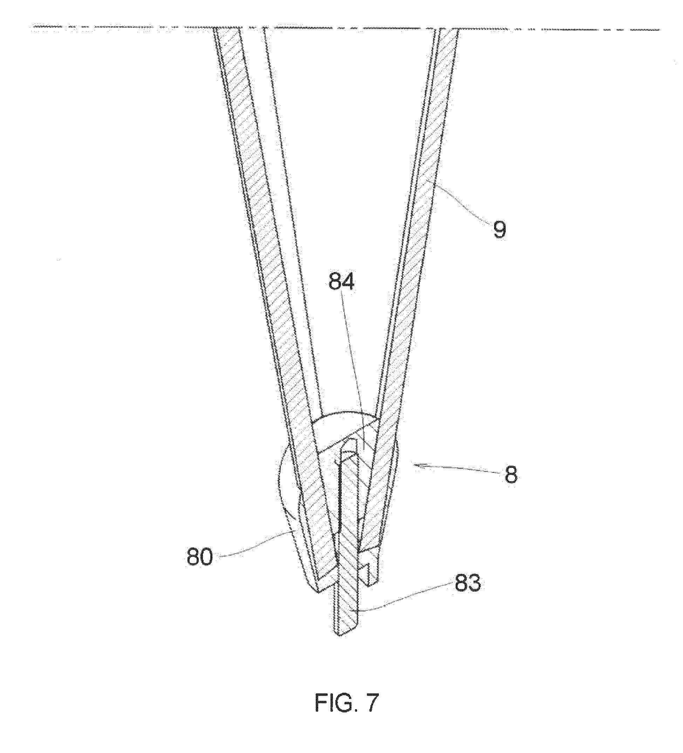

Referring to Figs. 6 and 7, each rack (8) comprises a support (80) shaped as a shank, with basically truncated-conical or tapered shape with increasing diameter from down up.

The shank (80) is internally empty and is provided with an axial hole or channel (81) with truncated conical shape that crosses the shank (80). A support insert (82) is inserted in the hole (81) of the shank (80), comprising a truncated-conical body (84) with increasing diameter from down up, which is coupled with the hole (81) of the shank with conical coupling.

The body (84) of the insert has a threaded stem (83) that protrudes axially downwards and comes out from the lower end of the shank (80).

As shown in Fig. 5, the lower part of the stem (83) is inserted in the fixing hole (64) of the connecting rod foot and is tightened by means of a nut (87), using an ordinary tool, such as a wrench (110) (Fig. 6).

The body (84) of the insert is provided on the external surface with four longitudinal grooves (85) that are spaced by 90°. The longitudinal grooves (85) have a cross-sectional profile with semicircle shape to receive the prongs (9). The prongs (9) are cylindrical rods with approximately 320 mm length and 5 mm diameter, made of a sturdy, light material, such as carbon fiber.

Suitably, also the internal surface of each shank (80) is provided with four longitudinal grooves (86) in register with the longitudinal grooves (85) of the body of the insert. In this way the prongs (9) are compressed between the grooves (85) of the insert and the grooves (86) of the shank and are given a configuration according to the corners of an overturned pyramid with square base.

Although the drawings show four prongs (9) mounted on each shank (80) it appears evident that a different number of prongs (9) can be provided.

The mounting and dismounting of the prongs (9) is extremely simple and rapid, it being simply necessary to tighten or loosen one bolt to fix or remove all prongs of a rack at the same time.

It must be considered that the special configuration of the racks (8) and of the actuation mechanism contained in the handle (1) have a limited weight. Therefore, also the dimensions and weight of the telescopic rod system (101) are minimized (Fig. 1). In particular, the external rod (102) has a diameter lower than 35 mm, preferably 30 mm, and thickness lower than 1.5 mm, preferably 1 mm.

Both rods are made of aluminum and advantageously the internal rod has a polyurethane foam core to absorb vibrations and reduce bending. In this way the entire beater has a weight lower than 2 Kg, preferably 1.6 Kg.

Numerous variations and modifications can be made to the present embodiment of the invention by an expert of the art, while still falling within the scope of the invention as claimed in the enclosed claims.

## Claims

1. Picking device for hanging fruit, in particular olives, comprising:
- a head (1),
- a pair of racks (8) provided with prongs (9),
- an actuation mechanism provided inside the head and adapted to move the racks (8) with alternate motion,
wherein
each rack (8) comprises:
- a support (80) provided with tapered axial hole (86) with increasing diameter from down up, and
- an insert (82) provided with tapered body (84) with increasing diameter from down up adapted to be coupled inside said axial hole (86) of the support with conical coupling,
**characterized in that**
the lower part of the prongs (9) is compressed between the external surface of the body of the insert and the internal surface of the support (80), in such a way that the prongs (9) have a divergent configuration relative to the axis of the support (80) from down up.

2. Device as claimed in claim 1, **characterized in that** the external surface of the body (84) of the insert and the internal surface of the support (80) are provided with longitudinal grooves (85, 86) to receive the lower part of the prongs (9).

3. Device as claimed in claim 1 or 2, **characterized in that** said insert (82) comprises a threaded stem (83) axially protruding downwards from said tapered body (84) of the insert to be tightened by means of a nut (87) to an actuation means (6, 6') of said rack.

4. Device as claimed in claim 3, **characterized in that** said actuation means of each rack (8) comprises a connecting rod (6, 6') comprising:
- a connecting-rod head (60) connected to actuation means, and
- a connecting-rod foot (63) provided with a hole (64) crossed by the threaded stem (83) of the insert of the rack.

5. Device as claimed in claim 4, **characterized in that** said actuation mechanism comprises:
- actuation means (2, 20) that drive an output shaft (21) into rotation, and
- a pin (5) provided with eccentric hole (50) that receives the output shaft (21), in which the heads (60) of each connecting-rod (6, 6') are arranged around the pin (5) with eccentric hole (50).

6. Device as claimed in claim 5, **characterized in that** said actuation means comprise an electric motor (2) connected to an epicycloidal reduction gear (20).

7. Device as claimed in claim 5 or 6, **characterized in that** said actuation mechanism comprises two ball bearings (7, 7') mounted between the pin (5) with eccentric hole and the heads (60) of the connecting-rods (6).

8. Device as claimed in any one of claims 5 to 7, **characterized in that** the head (1) of the device has a cylindrical shape of an ergonomic handle inside which the actuation means (2, 22) are axially arranged and the head (1) is provided with an upper flange (4) that receives the heads (60) of the two connecting-rods (6, 6') and a lid (17) that closes on the flange (4).

9. Device as claimed in claim 8, **characterized in that** the head (60) of each connecting-rod (6) is provided with a pin (61) that extends from the flange (4) to the lid (17) and around the pin (61) of each connecting-rod two friction rings (R) are situated between the flange (4) and the head of the connecting-rod and between the head of the connecting-rod and the lid (17).

10. Device as claimed in any one of the preceding claims, **characterized in that** the head (1) of the device is provided with switch button (B) and electrical connector (15) to receive the connector of a power cord (107).

## Patentansprüche

1. Vorrichtung zum Ernten von herabhängenden Früchten, insbesondere Oliven, umfassend:
- einen Kopf (1),
- ein Paar Gestelle (8), die mit Zinken (9) versehen sind,
- einen in dem Kopf angeordneten Betätigungsmechanismus, der in der Lage ist, die Gestelle in eine Hin- und Herbewegung zu versetzen,
wobei
jedes Gestell (8) Folgendes umfasst:
- eine Halterung (80), die mit einer axialen, konischen Bohrung (86) versehen ist, deren Durchmesser von unten nach oben zunimmt, und
- einen Einsatz (82), der mit einem konischen Körper (84) versehen ist, dessen Durchmesser von unten nach oben zunimmt und der geeignet ist, in die axiale Bohrung (86) der Halterung mittels konischer Verbindung eingekoppelt zu werden,
**dadurch gekennzeichnet, dass**
der untere Teil der Zinken (9) so zwischen der Außenfläche des Körpers des Einsatzes und der Innenfläche der Halterung (80) zusammengedrückt wird, dass die Zinken (9) eine von unten nach oben divergierende Gestaltung bezogen auf die Achse der Halterung (80) aufweisen.

2. Vorrichtung nach Anspruch 1, **dadurch gekennzeichnet, dass** die Außenfläche des Körpers (84) des Einsatzes und die Innenfläche der Halterung (80) mit Längsrillen (85, 86) versehen sind, um den unteren Teil der Zinken (9) aufzunehmen.

3. Vorrichtung nach Anspruch 1 oder 2, **dadurch gekennzeichnet, dass** der Einsatz (82) einen Gewindezapfen (83) umfasst, der axial nach unten aus dem konischen Körper (84) des Einsatzes auskragt, um mittels einer Schraubenmutter (87) an einem Betätigungsmittel (6, 6') des Gestells angezogen zu werden.

4. Vorrichtung nach Anspruch 3, **dadurch gekennzeichnet, dass** das Betätigungsmittel eines jeden Gestells (8) eine Pleuelstange (6, 6') umfasst, umfassend:
- einen Pleuelstangenkopf (60), der mit dem Betätigungsmittel verbunden ist, und
- einen Pleuelstangenfuß (63), der mit einer Bohrung (64) versehen ist, durch die der Gewindezapfen (83) des Einsatzes des Gestells hindurchgeht.

5. Vorrichtung nach Anspruch 4, **dadurch gekennzeichnet, dass** der Betätigungsmechanismus Folgendes umfasst:
- Betätigungsmittel (2, 20), die eine Abtriebswelle (21) in Drehung versetzen, und
- einen Zapfen (5), der mit einer exzentrischen Bohrung (50) versehen ist, die die Abtriebswelle (21) aufnimmt,
wobei die Köpfe (60) einer jeden Pleuelstange (6, 6') um den Zapfen (5) mit der exzentrischen Bohrung (50) herum angeordnet sind.

6. Vorrichtung nach Anspruch 5, **dadurch gekennzeichnet, dass** die Betätigungsmittel einen Elektromotor (2) umfassen, der mit einem Planetenuntersetzungsgetriebe (20) verbunden ist.

7. Vorrichtung nach Anspruch 5 oder 6, **dadurch gekennzeichnet, dass** der Betätigungsmechanismus zwei Kugellager (7, 7') umfasst, die zwischen dem Zapfen (5) mit exzentrischer Bohrung und den beiden Köpfen (60) der Pleuelstangen (6) angeordnet sind.

8. Vorrichtung nach einem beliebigen Anspruch von 5 bis 7, **dadurch gekennzeichnet, dass** der Kopf (1) der Vorrichtung die zylindrische Form eines ergonomischen Griffes aufweist, in dem die Betätigungsmittel (2, 22) axial angeordnet sind, und der Kopf (1) mit einem oberen Flansch (4) versehen ist, der die Köpfe (60) der beiden Pleuelstangen (6, 6') und einen Deckel (17) aufnimmt, der sich auf dem Flansch (4) schließt.

9. Vorrichtung nach Anspruch 8, **dadurch gekennzeichnet, dass** der Kopf (60) einer jeden Pleuelstange (6) mit einem Zapfen (61) versehen ist, der aus dem Flansch (4) zum Deckel (17) hin auskragt, und um jeden Zapfen (61) einer jeden Pleuelstange zwei Reibringe (R) angeordnet sind, die sich zwischen den Flansch (4) und den Kopf der Pleuelstange sowie zwischen den Kopf der Pleuelstange und den Deckel (17) legen.

10. Vorrichtung nach einem beliebigen der vorstehenden Ansprüche, **dadurch gekennzeichnet, dass** der Kopf (1) der Vorrichtung mit einem Druckknopfschalter (B) und einem elektrischen Verbinder (15) versehen ist, um den Stecker einer Elektroleitung (107) aufzunehmen.

## Revendications

1. Dispositif pour la récolte de fruits pendants, notamment les olives, comprenant :
- une tête (1),
- une paire de râteaux (8) munis de dents (9),
- un mécanisme d'actionnement positionné dans la tête et apte à faire bouger les dits râteaux (8) avec un mouvement alterné,
où
chaque râteau (8) comprend :
- un support (80) doté d'un trou axial (86) conique, de diamètre croissant du bas vers le haut, et
- un insert (82) doté d'un corps (84) conique, de diamètre croissant du bas vers le haut qui se couple dans ledit trou axial (86) du support en relation de couplage conique,
**caractérisé en ce que**
la partie inférieure des dites dents (9) est comprimée entre la surface externe du corps de l'insert et la surface interne du support (80), de manière que les dents (8) assument une configuration divergente par rapport à l'axe du support (80) en allant du bas vers le haut.

2. Dispositif selon la revendication 1, **caractérisé en ce que** la surface externe du dit corps (84) de l'insert et la surface interne du dit support (80) présentent des respectives rainures longitudinales (85, 86) pour accueillir la partie inférieure des dites dents (9).

3. Dispositif selon la revendication 1 ou 2, **caractérisé en ce que** ledit insert (82) comprend une tige filetée (83) qui déborde axialement vers le bas du dit corps conique (84) de l'insert pour être serrée moyennant un écrou (87) à un moyen actionneur (6, 6') des dits râteaux.

4. Dispositif selon la revendication 3, **caractérisé en ce que** ledit moyen actionneur de chaque râteau (8) comprend une bielle (6, 6') comprenant :
- une tête de bielle (60) couplée à des moyens actionneurs, et
- un pied de bielle (63) doté d'un trou (64) où passe ladite tige filetée (83) de l'insert des râteaux.

5. Dispositif selon la revendication 4, **caractérisé en ce que** le dit mécanisme d'actionnement comprend :
- des moyens actionneurs (2, 20) qui mettent en rotation un arbre de sortie (21), et
- un tourillon (5) doté d'un trou excentrique (50) qui accueille ledit arbre de sortie (21),
où lesdites têtes (60) de chaque bielle (6, 6') sont disposées autour du dit tourillon (5) ayant trou excentrique (50).

6. Dispositif selon la revendication 5, **caractérisé en ce que** lesdits moyens actionneurs comprennent un moteur électrique (2) couplé à un réducteur épicycloïdal (20).

7. Dispositif selon la revendication 5 ou 6, **caractérisé en ce que** ledit mécanisme d'actionnement comprend deux paliers (7, 7') interposés entre ledit tourillon (5) ayant trou excentrique et lesdites têtes (60) des bielles (6).

8. Dispositif selon l'une quelconque des revendications de 5 à 7, **caractérisé en ce que** ladite tête (1) du dispositif a une forme cylindrique de préhension ergonomique dans laquelle sont disposés axialement lesdits moyens actionneurs (2, 22) et ladite tête (1) présente supérieurement une bride (4) qui accueille les têtes (60) des deux bielles (6, 6') et un couvercle (17) qui se referme sur la bride (4).

9. Dispositif selon la revendication 8, **caractérisé en ce que** sur la tête (60) de chaque bielle (6) est prévu un tourillon (61) qui se déploie de la bride (4) au couvercle (17) et autour du dit tourillon (61) de chaque bielle sont disposées deux bagues de frottement (R), qui s'interposent entre la bride (4) et la tête de la bielle et entre la tête de la bielle et le couvercle (17).

10. Dispositif selon l'une quelconque des revendications précédentes, **caractérisé en ce que** ladite tête (1) du dispositif est dotée d'un bouton-poussoir interrupteur (B) et d'un connecteur électrique (15) en mesure d'accueillir le connecteur d'un câble d'alimentation (107).
